Europäisches Patentamt

European Patent Office

Office européen des brevets

(11) Publication number: **0 135 874**
**B1**

(12) **EUROPEAN PATENT SPECIFICATION**

(45) Date of publication of patent specification: **07.01.87**

(51) Int. Cl.⁴: **H 02 P 5/17, H 02 P 7/00**

(21) Application number: **84110686.7**

(22) Date of filing: **07.09.84**

(54) **Control system for AC electric car.**

(30) Priority: **09.09.83 JP 165185/83**

(43) Date of publication of application:
**03.04.85 Bulletin 85/14**

(45) Publication of the grant of the patent:
**07.01.87 Bulletin 87/02**

(84) Designated Contracting States:
**DE FR GB SE**

(56) References cited:
**US-A-4 090 116**

**1978: 4th IECI ANNUAL CONFERENCE
PROCEEDINGS, INDUSTRIAL APPLICATIONS
OF MICROPROCESSORS, March 20-22, 1978,
Sheraton Hotel, Philadelphia (US), pages 216-
222 IEEE NEW YORK (US) K. KAMIYAMA et al.:
"Microprocessor-controlled fast-response
speed regulator for thyristorized reversible
regenerative DCM drives".**

(73) Proprietor: **HITACHI, LTD.**
**6, Kanda Surugadai 4-chome Chiyoda-ku
Tokyo 100 (JP)**

(72) Inventor: **Kimura, Akira**
**8-302, Aoba-Apartment House
13-1-302, Aobacho Katsuta-shi (JP)**
Inventor: **Tsutsui, Yoshio**
**12-1-305, Aobacho
Katsuta-shi (JP)**
Inventor: **Sakamoto, Hideo**
**Sasanoryo 3174-14, Nakane
Katsuta-shi (JP)**
Inventor: **Yamada, Kazuhiro**
**843-10, Nakane
Katsuta-shi (JP)**

(74) Representative: **Patentanwälte Beetz sen. -
Beetz jun. Timpe - Siegfried - Schmitt-Fumian
Steinsdorfstrasse 10
D-8000 München 22 (DE)**

# Description

The present invention relates to a control system for an AC electric car using a stored-program processor, e.g., a microprocessor.

In the operation of an AC electric car which is powered by a.c. power supplied through the trolley wire, it is a general convention to step down the power voltage with a transformer, and supply the low-voltage power to a controlled rectifier, such as a thyristor bridge or thyristor-diode hybrid bridge, for controlling the d.c. voltage applied to the motors. The control system for the AC electric car is required to have not only the motor current control function in which the controlled rectifier is phase-controlled so that the actual motor current follows the command, but also additional functions including the detection and display of the car speed and the detection of slip and skid of wheels based on the output of a tachometer generator attached to the wheel axle and the processing for tandem control in which a plurality of electric cars are controlled in unison in accordance with the operational command. Furthermore, the recent demand for the enhanced reliability and easiness in maintenance of the electric car requires of the control system to have new functions such as monitor function which logs the operational states of the car and self-diagnostic function.

When the aforementioned control system is constructed using a stored-program processor, e.g., a microprocessor, the arrangement is made in general such that individual processings take place in response to periodical interrupt signals provided externally to the processor. The control system needs to determine the phase angle of thyristors in the controlled rectifier at every half cycle of the power voltage and, therefore, the process related to the motor current control function is carried out in general in synchronism with the power voltage cycle, i.e., the interrupt signal for this purpose must be in synchronism with the power voltage cycle. The control program is arranged so that the processes for the other functions as mentioned above take place following the process for the motor current control, and this results in quick processing, satisfactory control characteristics and simplified software that brings enhanced reliability and easiness in maintenance of the control system.

However, it is required in the electric railway system to provide a non-powered section at each switching point between two power supply sections associated with respective ground transformer stations, and the control system arranged as mentioned above does not generate interrupt signals to the processor during a run in the non-powered section. As a result, no interrupt programs are initiated, and those functions which need processing even at the non-powered section will be lost. The absence of interrupt signals will also occur when the pantograph separates from the trolley wire, or when an electric circuit fails to produce the interrupt signals based on the a.c. power voltage.

An object of the present invention is to provide a control system for AC electric car which eliminates the prior art deficiencies and is capable of retaining the necessary functions even in the absence of the timing signals derived from the a.c. power voltage supplied from the trolley wire.

According to one aspect of this invention, the control system generates a first timing signal in synchronism with the a.c. power voltage supplied from the trolley wire for performing at least the phase control process for the aforementioned controlled rectifier by the interrupt program and a second timing signal which is used for performing processes other than the phase control process by the interrupt program even if the first timing signal is absent.

According to another aspect of the invention, an interrupt signal for initiating the phase control for the controlled rectifier is produced in response to the first timing signal in synchronism with the power voltage, and another interrupt signal based on the second timing signal is produced to carry out processes other than the phase control process. In consequence, the phase control takes place in the presence of the power voltage from the trolley wire, while the other processes needed uninterruptedly are carried out even in the absence of the power voltage from the trolley wire. In this case, if the two timing signals have the same frequency, related processes necessary for the phase control, e.g., computation for producing a current command, may be executed by the interrupt program initiated by the second timing signal with the same frequency as obtained if the related processes are carried out based on the first timing signal. As compared with the phase control, other control processes often suffice to take place less frequently, and in these cases the second timing signal may be set to have a frequency 1/2, 1/3 or so on of the frequency of the first timing signal. If, for example, a 1/2 frequency is selected for the second timing signal, phase angles in the positive and negative halves of each a.c. voltage cycle are calculated based on single data derived from the current control processing.

According to still another aspect of the invention, all processes are carried out by the interrupt program in response to the first timing signal so long as it is obtained, and all processes are carried out in response to the second timing signal only if the first timing signal is not obtained, although it is self-evident that the phase control has no meaning if the absence of the first timing signal is caused by failure of the power voltage.

The present invention will be apparent from the following detailed discription taken in conjunction with the accompanying drawings, in which:

Fig. 1 is a block diagram showing the main circuit and control circuit for the AC electric car embodying the present invention;

Fig. 2 is a flowchart showing an embodiment of the interrupt program stored in the read-only memory (ROM) within the microprocessor (MPU) shown in Fig. 1;

Fig. 3 is a flowchart showing another embodiment of the program;

Fig. 4 is a block diagram showing the main circuit and control circuit for the AC electric car according to another embodiment of the invention;

Fig. 5 is a flowchart showing an embodiment of the interrupt program stored in the ROM within the microprocessor (MPU) shown in Fig. 4;

Fig. 6 is a block diagram showing another embodiment of the timing signal generating circuits SYG1 and SYG2 and the timing signal switching circuit SYE shown in Fig. 4; and

Fig. 7 is a timing chart showing the operation of the circuit arrangement shown in Fig. 6.

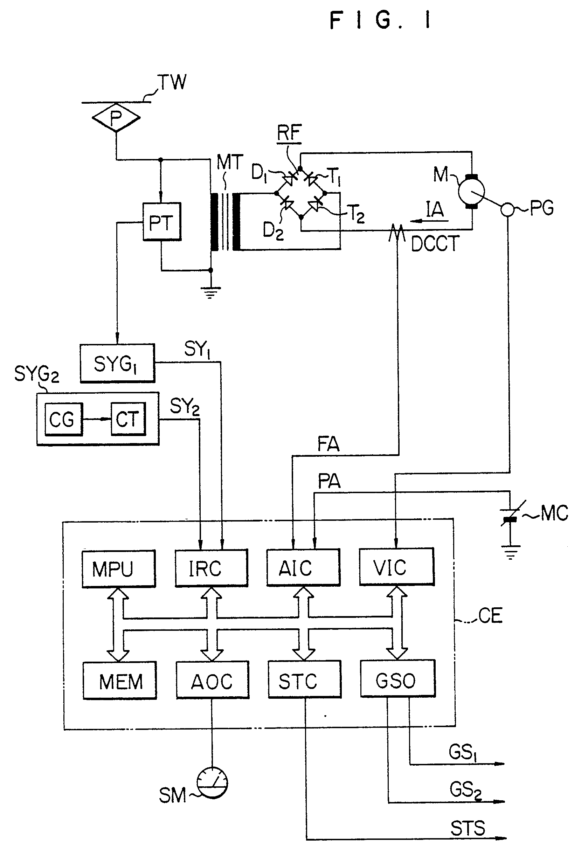

In Fig. 1, there are shown schematically electrical main and control devices mounted to an electric car which may be a particular one of train cars (not shown). In the figure, the a.c. voltage received from a trolley wire TW through a pantograph P is supplied to a transformer MT so that the voltage is stepped down, and the step-down voltage is supplied to a controlled rectifier RF composed of diodes $D_1$ and $D_2$ and thyristors $T_1$ and $T_2$. The controlled rectifier RF is phase-controlled by a controller CE, and a d.c. output voltage is applied to a motor M, in which a motor current IA flows in proportion to the difference between the d.c. output voltage and the counter electromotive force of the motor M. The controller CE includes a microprocessor MPU, interrupt control circuit IRC, analog signal input circuit AIC, speed signal input circuit VIC, gate signal output circuit GSO, tandem signal output circuit STC, analog signal output circuit AOC, and memory circuit MEM, all linked up with each other through the bus lines. The a.c. voltage received by the pantograph P is also stepped down by an auxiliary transformer PT, and this voltage is supplied to a first timing signal generating circuit $SYG_1$, which provides a rectangular first timing signal $SY_1$ in synchronism with the a.c. power voltage to the interrupt control circuit IRC. A second timing signal generating circuit $SYG_2$ generates a second timing signal $SY_2$ having a frequency equal to that of the first timing signal $SY_1$ divided by an integer, and supplies it to the interrupt control circuit IRC. The second timing signal generating circuit $SYG_2$ includes a quartz oscillator CG for producing clock pulses at a given frequency and a frequency divider CT for dividing the clock pulses so as to produce clock pulses of desired frequency which are used as the second timing signal $SY_2$. The analog signal input circuit AIC is supplied with a reference signal PA generated by a main control MC and a feedback signal FA produced by a d.c. current transformer DCCT in proportion to the motor current IA. The rotational speed of the motor M is detected by a pulse generator PG, which provides pulses at a rate coresponding to the motor speed to the speed signal input circuit VIC.

The gate signal output circuit GSO produces gate signals $GS_1$ and $Gs_2$ for the thyristors $T_1$ and $T_2$, respectively, while the tandem signal output circuit STC produces a tandem control signal STS for controlling other electric cars connected in tandem with the particular car in accordance with the command of the main control MC. The analog signal output circuit AOC produces a d.c. output voltage in response to the command of the microprocessor MPU so that the car speed is indicated on a speed meter SM.

The microprocessor MPU includes a microprocessing unit, a read-only memory (ROM) storing the interrupt program and a clock pulse generator for producing clock pulses determining the timing in operation of the microprocessing unit, although they are not shown in the figure.

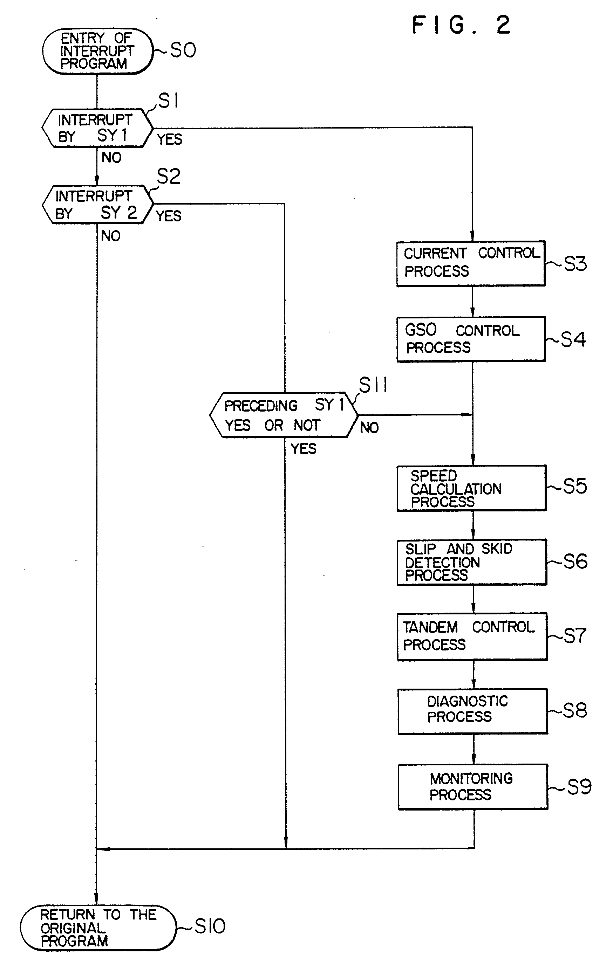

Fig. 2 shows a flowchart of the interrupt program stored in the ROM, and the program is processed as follows. When the first timing signal generating circuit SYG1 or the second timing signal generating circuit $SYG_2$ provides an output to the interrupt control circuit IRC, causing the microprocessor MPU, to interrupt the currently executed program and transfer its operation to the first step S0 of the program shown in Fig. 2. For example, when the first timing signal $SY_1$ is given to the interrupt control circuit IRC, it is detected in step S1, and the program proceeds to step S3 in which the current control process is carried out for calculating data required for motor current control and step S4 in which the GSO control process is carried out for calculating data required for controlling the gate signal (GSO) output. Then, steps S5 through S9 are carried out for the respective processes as illustrated, and in step S10 the interrupt program ends and the operation returns to the original program. More particularly, in the process of motor current control in step S3, the reference signal PA and feedback signal FA derived from the analog input circuit AIC are compared with each other and the phase angles of the gate signals $GS_1$ and $GS_2$ are determined depending on the difference of the two signals. In step S4, the process for controlling the gate signal output circuit GSO takes place so that the gate signals $GS_1$ and $GS_2$ are produced according to the phase angles obtained by the process for the current control in step S3. In step S5, the frequency of pulses provided by the pulse generator PG and entered through the speed signal input circuit VIC is converted to a value proportional to the car speed by additionally using parameters such as the wheel diameter, and it is given through the analog signal output circuit AOC to the speed meter SM. In step S6, the slip and skip of wheels are detected using the result of the step S5, and in step S7, the tandem control signal STS is produced from the result of the process in step S5 so as to control the tandem signal output circuit STC. Step S8 checks the integrity of the results obtained in steps S3 through S7, and if abnormality is found, control is transferred to a corresponding process for halting the vehicle or inhibiting the change of phase angle in the gate signal output circuit GSO. In step S9, the results of processes in steps S3 through S8 are stored in the memory circuit MEM for the purpose of logging the operational states of the vehicle. The above processes are carried out in well-known manner and no detailed explanation will be necessary.

On the other hand, when the second timing signal $SY_2$ is given to the interrupt control circuit IRC, it is detected in step S2, and the program branches to step S11 for checking whether or not an interrupt by the preceding first timing signal $SY_1$ has normally occurred. Since the first timing signal $SY_1$ is generated at a constant frequency in synchronism with the power voltage, the above check can be readily carried out by checking whether the first timing signal $SY_1$ has occurred within a predetermined time interval corresponding to the constant frequency after the preceding first timing signal. If not occurred, it is determined that the first timing signal has expired. If the timing signal $SY_1$ is found as normally occurred, the interrupt process based on the timing signal $SY_2$ is uncesessary and the operation is returned to the original program in step S10. If the timing signal $SY_1$ is found as expired, the program branches to step S5 and executes the processes in steps S5 through S9. Accordingly, when the car runs through a non-powered section of the trolley wire, the second timing signal generating circuit $SYG_2$ generates the second timing signal $SY_2$ to the interrupt control circuit IRC, so that processes necessary even in the non-powered section (e.g., steps S4 through S8 in Fig. 2) are carried out.

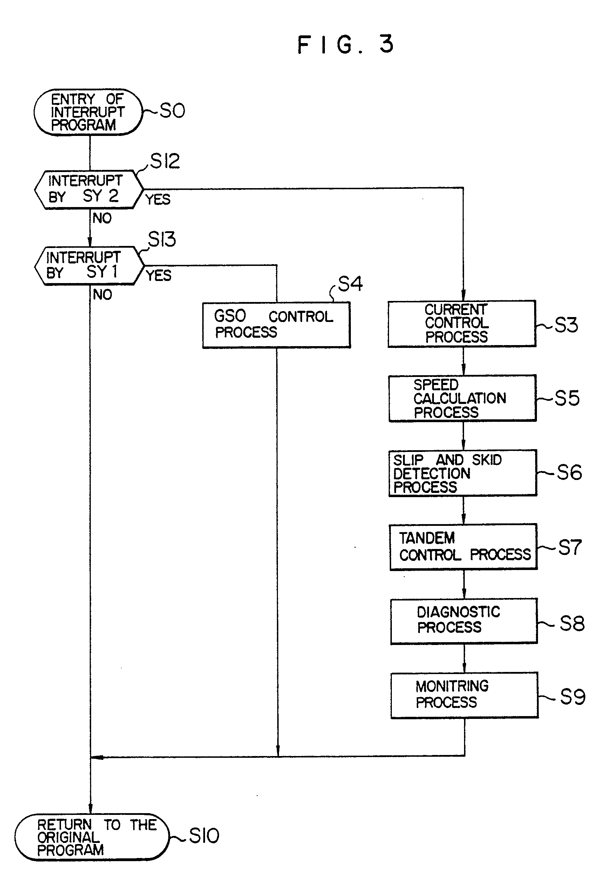

Fig. 3 shows a flowchart of another interrupt program which may be used in place of the program shown in Fig. 2. First, when the second timing signal $SY_2$ is given to the interrupt control circuit IRC, it is detected in step S12, and the program branches to step S3 in which the process for the motor current control takes place. Then, the processes in steps S5 through S9 are carried out, and then the operation returns to the original program at step S10. In the process for the motor current control in step S3, the reference signal PA and feedback signal FA received through the analog input circuit AIC are compared with each other, and the phase angles of the gate signals GS1 and GS2 are determined depending on the difference between the two signals. In this program, however, the process for the gate signal output GSO circuit does not take place, and the results of the above processes are stored in the memory MEM. The processes in steps S5 through S9 are the same as those of the program shown in Fig. 2. On the other hand, when the first timing signal $SY_1$ is given to the interrupt control circuit IRC, it is detected in step S13, and the program branches to step S4 for the process of the gate signal output GSO circuit so that the gate signal output GSO circuit is controlled to produce the gate signals $GS_1$ and $GS_2$ according to the phase angles obtained by the process for the current control in step S3. Accordingly, when the car runs through the non-powered section of the trolley wire, the second timing signal generating circuit $SYG_2$ provides the second timing signal $SY_2$ to the interrupt control circuit IRC, and processes necessary even in the non-powered section (e.g., steps 53 and 55 through S8 in Fig. 3) are carried out. Since the control of the gate signal output GSO circuit is carried out in response to the first timing signal $SY_1$, the gate signals $GS_1$ and $GS_2$ for the thyristors $T_1$ and $T_2$ are in synchronism with the power voltage supplied from the trolley wire TW, and the desired control performance is accomplished.

Since the second timing signal has a frequency equal to that of the first timing signal divided by an integer, the process necessary for the phase control initiated by the first timing signal is always carried out based on the latest data (e.g. calculated in step S3 for the current control).

If, as compared with the process for phase control, the other processes may be carried out less frequently, the above-mentioned integer may be selected to be 2 or larger so that the duty of the processor is reduced while satisfying the desired functions and performance of the system.

Although it is not shown in the flowchart, some of the processes other than the phase control process which do not need to be executed in the non-powered section may be executed before or after the phase control process in step S4 in response to the first timing signal $SY_1$.

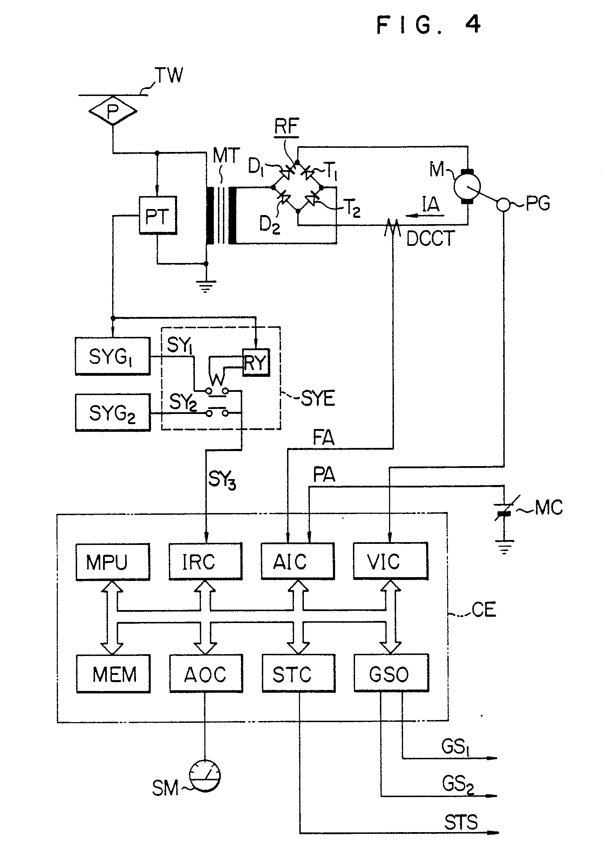

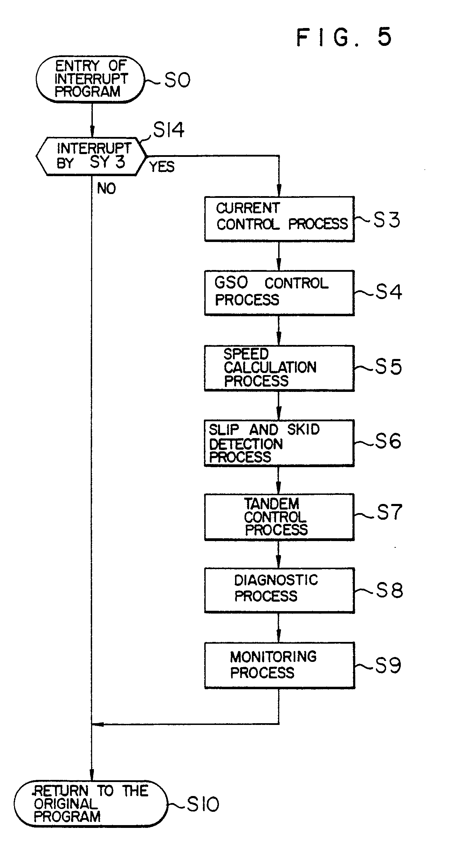

Figs. 4 and 5 shown another embodiment of the present invention. In Fig. 4, the same reference symbols are used for the same or like components as those in Fig. 1. The arrangement of Fig. 4 is identical to that of Fig. 1, exept that the first and second timing signals $SY_1$ and $SY_2$ are supplied to a timing signal switching circuit SYE made up of a relay RY or the like, which provides a third timing signal $SY_3$ to the interrupt control circuit IRC. In this arrangement, when the car receives an a.c. power from the trolley wire TW, the auxiliary transformer PT provides an output, and the timing signal switching circuit SYE provides the third timing signal $SY_3$ corresponding to the first timing signal $SY_1$, so that the microprocessor MPU is subjected to an interruption by the interrupt control circuit IRC in synchronism with the a.c. power voltage received from the trolley wire TW.

Fig. 5 shows a flowchart of the interrupt program for the AC electric car control system. At the occurrence of interrupt, the microprocessor MPU suspends the current executing program, and its operation is transferred to step S0. The interrupt by the signal $SY_3$ is detected in step S14, and the processes in steps S3 through S9, which are identical to those of Fig. 2, are carried out. As a result, the gate signal output circuit GSO is controlled in synchronism with the a.c. power voltage received from the trolley wire TW. On the other hand, when the car runs through the non-powered section, the auxiliary transformer PT provides no output, and the timing signal switching circuit SYE provides the third timing signal $SY_3$ based on the second timing signal $SY_2$, causing the microprocessor to interrupt its normal program through the interrupt control circuit IRC, and proceed to the same processes as described above. Accordingly, even when the car runs through the non-powered section, all of the processes S3 through S9 are carried out to perform the tandem control function, monitor function, and car speed detection and indication.

In this embodiment, only the timing signal $SY_3$ is used for interruption, and this simplifies the interrupt control circuit as well as the program resulting in minimizing the processing time.

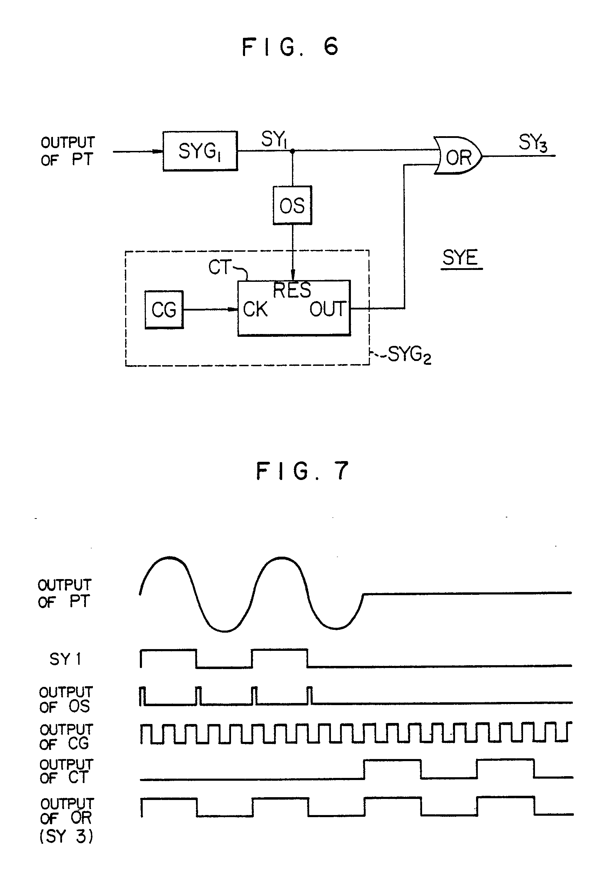

Fig. 6 shows still another embodiment of the present invention, illustrating only those portions corresponding to the timing signal sitching circuit SYE, first timing signal generating circuit $SYG_1$ and second timing signal generating circuit $SYG_2$ of Fig. 4. Fig. 7 shows a timing chart of the signals produced in the arrangement of Fig. 6. The auxiliary transformer PT provides its output to the first timing signal generating circuit $SYG_1$, which converts the output into a rectangular first timing signal $SY_1$ in synchronism therewith, as shown in Fig. 7, and supplies the timing signal $SY_1$ to an OR gate and also to a one-shot trigger circuit OS. As shown in Fig. 7, the one-shot trigger circuit OS provides a pulse at each transition of the first timing signal $SY_1$, and it is supplied to the reset terminal RES of a counter circuit CT.

On the other hand, an oscillation circuit CG provides output pulses of a frequency larger than that of the first timing signal $SY_1$ as shown in Fig. 7, and the output pulses are supplied to the clock terminal CK of the counter circuit CT, which is arranged to count down the received pulses and provide a signal at its output terminal OUT at a frequency equal to the output frequency of the auxiliary transformer PT.

In operation, when the car receives the a.c. power voltage, the auxiliary transformer PT provides the output to the circuit $SYG_1$, which in turn produces the first timing signal $SY_1$ so that the one-shot trigger circuit OS provides a pulse at each transition of the $SY_1$, causing the counter circuit CT to reset. Therefore, the counter circuit CT does not provide the output, but the first timing signal $SY_1$ is fed through the OR gate as the third timing signal $SY_3$.

On the other hand, when the car is running through the non-powered section, the auxiliary transformer PT and hence the one-shot trigger circuit S0 provide no output. Accordingly, the counter circuit CT is not reset, but it counts down the output of the oscillation circuit CG to produce at its output terminal OUT the signal at a frequency equal to that of the first timing signal $SY_1$. This signal is fed through the OR gate as the third timing signal $SY_3$.

This embodiment eliminates any delay in the switching operation between the first timing signal $SY_1$ and the second timing signal.

According to the present invention, as described above, all of the desired functions can be accomplished even if the car is running through the non-powered section.

**Claims**

1. A control system for an AC electric car having a transformer (MT) receiving on its primary winding an alternating current from a trolley wire through a pantograph, a controlled rectifier (RF) having its input terminal connected to the secondary winding of said transformer and operating to convert the alternating current into a direct current, and a DC motor (M) connected to the output terminal of said controlled rectifier for driving the car, said system comprising: means ($SYG_1$) for generating a first timing signal in synchronism with the received alternating current so long as the transformer receives the AC; and a processing unit (MPU) of a stored program type for carrying out phase control of said controlled rectifier by an interruption based on said first timing signal; characterized by means ($SYG_2$) including oscillator means (CG) and frequency division means (CT) for generating a second timing signal; and that, during a first operating mode in which said transformer receives the alternating current, said processing unit is arranged to perform processes other than said phase control, these other processes being performed by an interruption based on said first or said second timing signal and, during a second operating mode in which said transformer does not receive the alternating current, to perform processes other than said phase control by an interruption based on said second timing signal.

2. A control system according to claim 1, characterized by that said processes other than said phase control include at least one of speed detection and display process, wheel slip and skid detection process, tandem control process, self-diagnostic process, and monitoring process.

3. A control system according to claim 1, characterized by that said processing unit performs the processes other than said phase control by an interruption based on said first timing signal during said first operating mode.

4. A control system according to claim 1, characterized by that said processing unit performs the processes other than said phase control by an interruption based on said second timing signal during said first operating mode.

5. A control system according to claim 1, characterized by that said processing unit performs the processes including said phase control by an interruption based on said first timing signal so long as said first timing signal is present, and performs the processes by an interruption based on said second timing signal when the transformer does not receive the AC and said first timing signal disappears.

6. A control system according to claim 5, characterized by timing signal switching means (SYE) having an input section for receiving any of said first and second timing signals and adapted to produce said first timing signal, as an output, so long as said first timing signal is received and produce said second timing signal as an output when said first timing signal is not received, and that, said processing unit is arranged to perform said processes by an interruption based on the output of said switching means.

7. A control system according to claim 1, characterized by that said processing unit is provided with an input section for receiving said first and second timing signals and adapted to perform processes including said phase control by an interruption based on said first timing signal and perform at least processes other than said phase control by an interruption based on said second timing signal upon disappearance of said first timing signal.

8. A control system according to claim 1, characterized by that said processing unit performs, in said first operating mode, phase angle determinating process and phase angle memorizing process by an interruption based on said second timing signal and retrieving process for the memorized phase angle and gate signal output process for said controlled rectifier by an interruption based on said first timing signal.

9. A control system according to any one of claims 1 through 8, characterized by that said second timing signal has a frequency equal to the frequency of said first timing signal divided by an integer.

10. A control system according to any one of claims 1 through 9, characterized by means for synchronizing said second timing signal with said first timing signal.

**Patentansprüche**

1. Regelsystem für einen wechselstromgespeisten elektrischen Wagen, der einen an seiner Primärwicklung einen Wechselstrom von einem Oberleitungsdraht über einen Stromabnehmer empfangenen Transformator (MT), einen gesteuerten Gleichrichter (RF), dessen Eingangsanschluß mit der Sekundärwicklung des Transformators verbunden ist und der den Wechselstrom in einen Gleichstrom umsetzt und einen Gleichstrommotor (M) hat, der mit dem Ausgangsanschluß des gesteuerten Gleichrichters verbunden ist, um den Wagen anzutreiben, wobei das Regelsystem aufweist:

Mittel (SYG$_1$), die solange der Transformator Wechselstrom empfängt, ein erstes Zeitsteuersignal synchron mit dem empfangenen Wechselstrom erzeugen, und

eine speicherprogrammierte Verarbeitungseinheit (NPU), die durch eine auf dem ersten Zeitsteuersignal beruhende Unterbrechung eine Phasensteuerung für den gesteuerten Gleichrichter ausführt; gekennzeichnet durch Mittel (SYG$_2$) einschließlich eines Oszillators und eines Frequenzteilers (CT) zur Erzeugung eines zweiten Zeitsteuersignals, wobei die Verarbeitungseinheit während einer ersten Betriebsart, in der der Transformator den Wechselstrom empfängt, staat der Phasensteuerung andere Verarbeitungen ausführt, die durch eine auf dem ersten oder dem zweiten Zeitsteuersignal beruhende Unterbrechung durchgeführt werden, und während einer zweiten Betriebsart, in der der Transformator den Wechselstrom nicht empfängt, statt der Phasensteuerung durch eine auf dem zweiten Zeitsteuersignal beruhende Unterbrechung andere Verarbeitungen ausführt.

2. Regelsystem nach Anspruch 1, dadurch gekennzeichnet, daß die statt der Phasensteuerung durchgeführten anderen Verarbeitungen zumindest eine der nachfolgenden Prozeduren umfassen:
— Geschwindigkeitserfassungs- und Anzeigeprozedur;
— Radschlupf- und Blockiererfassungsprozedur;
— Tandemsteuerprozedur;
— Eigenprüfprozedur; und
— Überwachungsprozedur.

3. Regelsystem nach Anspruch 1, dadurch gekennzeichnet, daß die Verarbeitungseinheit die statt der Phasensteuerung durchgeführten Prozeduren mittels einer während der ersten Betriebstart stattfindenden Unterbrechung aufgrund des ersten Zeitsteuersignals durchführt.

4. Regelsystem nach Anspruch 1, dadurch gekennzeichnet, daß die Verarbeitungseinheit die statt der Phasensteuerung durchgeführten Prozeduren mittels einer während der ersten Betriebstart stattfindenden Unterbrechung aufgrund des zweiten Zeitsteuersignals durchführt.

5. Regelsystem nach Anspruch 1, dadurch gekennzeichnet, daß die Verarbeitungseinheit die Prozeduren einschließlich der Phasensteuerung mittels einer auf dem ersten Zeitsteuersignal beruhenden Unterbrechung solange durchführt, wie das erste Zeitsteuersignal vorliegt und die mittels einer Unterbrechung aufgrund des zweiten Zeitsteuersignals durchgeführten Prozeduren ausführt, wenn der Transformator den Wechselstrom nicht empfängt und das erste Zeitsteuersignal verschwindet.

6. Regelsystem nach Anspruch 1, gekennzeichnet durch eine Zeitsteuersignalschalteinrichtung (SYE), die einen Eingabeabschnitt hat, der jeweils das erste und zweite Zeitsteuersignal empfängt und die das erste Zeitsteuersignal als Ausgang solange abgibt, wie das erste Zeitsteuersignal empfangen wird und das zweite Zeitsteuersignal als Ausgangssignal abgibt, wenn das erste Zeitsteuersignal nicht empfangen wird, wobei die Verarbeitungseinheit die Prozeduren mittels einer auf dem Ausgangssignal der Schalteinrichtung beruhenden Unterbrechung ausführt.

7. Regelsystem nach Anspruch 1, dadurch gekennzeichnet, daß die Verarbeitungseinheit mit einem Eingabeabschnitt versehen ist, der das erste und zweite Zeitsteuersignal empfängt und zur Durchführung von Prozeduren einschließlich der Phasensteuerung durch eine auf dem ersten Zeitsteuersignal beruhende Unterbrechung und zur Durchführung von Prozeduren anstatt der Phasensteuerung durch eine Unterbrechung eingerichtet ist, die auf dem zweiten Zeitsteuersignal beim Verschwinden des ersten Zeitsteuersignals beruht.

8. Regelsystem nach Anspruch 1, dadurch gekennzeichnet, daß die Verarbeitungseinheit in der

ersten Betriebsart eine Phasenwinkelermittlungsprozedur und eine Phasenwinkelspeicherprozedur durch eine auf dem zweiten Zeitsteuersignal beruhende Unterbrechung und durch eine auf dem ersten Zeitsteuersignal beruhende Unterbrechung eine Wiedergewinnungsprozedur für den gespeicherten Phasenwinkel und eine Torsignalausgabeprozedur für den gesteuerten Gleichrichter durchführt.

9. Regelsystem nach einem der Ansprüche 1—8, dadurch gekennzeichnet, daß die Frequenz des zweiten Zeitsteuersignals gleich der durch eine Ganzzahl geteilten Frequenz des ersten Zeitsteuersignals ist.

10. Regelsystem nach einem der Ansprüche 1—9, gekennzeichnet durch eine Einrichtung, die das zweite Zeitsteuersignal mit dem ersten Zeitsteuersignal synchronisiert.

**Revendications**

1. Système de commande d'une voiture électrique alimentée par un courant alternatif et comportant un transformateur (MT) recevant, dans son enroulement primaire, un courant alternatif en provenance d'un fil de trolley par l'intermédiaire d'un pantographe, un redresseur commandé (RF) dont la borne d'entrée est raccordée à l'enroulement secondaire dudit transformateur et qui agit de manière à convertir le courant alternatif en un courant continu, et un moteur à courant continu (M) raccordé à la borne de sortie dudit redresseur commandé de mainère à entraîner la voiture, ledit système comprenant: des moyens (SYG$_1$) pour produire un premier signal de cadencement en synchronisme avec le courant alternatif reçu tant que le transformateur reçoit le courant alternatif; et une unité de traitement (MPU) du type à programme mémorisé pour l'exécution de la commande de phase dudit redresseur commandé, au moyen d'une interruption basée sur ledit premier signal de cadencement; caractérisé par des moyens (SYG$_2$) comprenant des moyens formant oscillateur (CG) et des moyens diviseurs de fréquence (CT) pour produire un second signal de cadencement; et que ladite unité de traitement est agencée de mainère à exécuter, pendant un premier mode de fonctionnement pendant lequel ledit transformateur reçoit le courant alternatif, des processus autres que ladite commande de phase, ces autres processus étant exécutés au moyen d'une interruption basée sur ledit premier ou ledit second signal de cadencement, et à exécuter pendant un second mode de fonctionnement pendant lequel ledit transformateur ne reçoit pas le courant alternatif des processus autres que ladite commande de phase, au moyen d'une interruption basée sur ledit second signal de cadencement.

2. Système de commande selon la revendication 1, caractérisé en ce que lesdits processus autres que ladite commande de phase incluent au moins l'une des processus: processus de détection et d'affichage de la vitesse, processus de détection du glissement et du patinage des roues, processus de commande tandem, processus d'auto-diagnostic et processus de contrôle.

3. Système de commande selon la revendication 1, caractérisé en ce que ladite unité de traitement exécute les processus autres que ladite commande de phase, au moyen d'une interruption basée sur ledit premier signal de cadencement pendant ledit premier mode de fonctionnement.

4. Système de commande selon la revendication 1, caractérisé en ce que ladite unité de traitement exécute les processus autres que ladite commande de phase, au moyen d'une interruption basée sur ledit premier signal de cadencement pendant ledit premier mode de fonctionnement.

5. Système de commande selon la revendication 1, caractérisé en ce que ladite unité de traitement exécute les processus pendant ladite commande de phase, au moyen d'une interruption basée sur ledit premier signal de cadencement, tant que ledit premier signal de cadencement est présent, et exécute les processus au moyen d'une interruption basée sur ledit second signal de cadencement lorsque le transformateur ne reçoit pas de courant alternatif et que ledit premier signal de cadencement disparaît.

6. Système de commande selon la revendication 5, caractérisé par des moyens (SYE) de commutation du signal de cadencement, possédant une section d'entrée pour recevoir l'un quelconque desdits premiers et seconds signaux de cadencement et apte à produire ledit premier signal de cadencement, en tant que signal de sortie, tant que ledit premier signal de cadencement est reçu, et à produire ledit second signal de cadencement en tant que signal de sortie lorsque ledit premier signal de cadencement n'est pas reçu, et que ladite unité de traitement est agencée de manière à exécuter lesdits processus au moyen d'une interruption basée sur le signal de sortie desdits moyens de commutation.

7. Système de commande selon la revendication 1, caractérisé en ce que ladite unité de traitement est munie d'une section d'entrée pour recevoir lesdits premier et second signaux de cadencement et est apte à exécuter des processus incluant ladite commande de phase au moyen d'une interruption basée sur ledit premier signal de cadencement et à exécuter au moins des processus autres qui ladite commande de phase au moyen d'une interruption basée sur ledit second signal de cadencement, lors de la disparition dudit premier signal de cadencement.

8. Système de commande selon la revendication 1, caractérisé en ce que ladite unité de traitement exécute, pendant ledit premier mode de fonctionnement, un processus de détermination de l'angle de phase et un processus de mémorisation de l'angle de phase au moyen d'une interruption basée sur ledit second signal de cadencement et, un processus de récupération de l'angle de phase mémorisé et un processus de délivrance de signaux de commande pour ledit redresseur commandé, au moyen d'une interruption basée sur ledit premier signal de cadencement.

9. Système de commande selon l'une quelcon-

13 **0 135 874** 14

que des revendications 1 à 8, caractérisé en ce que ledit second signal de cadencement possède une fréquence égale à la fréquence dudit premier signal de cadencement, divisée par un nombre entier.

10. Système de commande selon l'une quelconque des revendications 1 à 9, caractérisé par des moyens pour synchroniser ledit second signal de cadencement sur ledit premier signal de cadencement.

8

# F I G. I

0 135 874

FIG. 2

ENTRY OF
INTERRUPT
PROGRAM ─ S0

INTERRUPT
BY SY1 ─ S1
YES
NO

INTERRUPT
BY SY2 ─ S2
YES
NO

CURRENT CONTROL
PROCESS ─ S3

GSO CONTROL
PROCESS ─ S4

PRECEDING SY1
YES OR NOT ─ S11
NO
YES

SPEED
CALCULATION
PROCESS ─ S5

SLIP AND SKID
DETECTION
PROCESS ─ S6

TANDEM CONTROL
PROCESS ─ S7

DIAGNOSTIC
PROCESS ─ S8

MONITORING
PROCESS ─ S9

RETURN TO THE
ORIGINAL
PROGRAM ─ S10

2

# F I G . 3

```
    ┌─────────────┐
    │  ENTRY  OF  │ ∼S0
    │ INTERRUPT   │
    │  PROGRAM    │
    └─────────────┘
          │
    ╱─────────────╲ ∼S12
   ⟨  INTERRUPT    ⟩──────────────────────┐ YES
    ╲ BY   SY 2  ╱                         │
          │ NO                             │
          │                                │
    ╱─────────────╲ ∼S13                   │
   ⟨  INTERRUPT    ⟩──────────┐ YES        │
    ╲ BY   SY 1  ╱            │            │
          │ NO               │            │
          │          ∼S4     │            │
          │     ┌─────────────┐     ┌─────────────┐
          │     │ GSO  CONTROL│     │  CURRENT    │ ∼S3
          │     │   PROCESS   │     │  CONTROL    │
          │     └─────────────┘     │  PROCESS    │
          │            │            └─────────────┘
          │            │                   │
          │            │            ┌─────────────┐
          │            │            │   SPEED     │ ∼S5
          │            │            │ CALCULATION │
          │            │            │  PROCESS    │
          │            │            └─────────────┘
          │            │                   │
          │            │            ┌─────────────┐
          │            │            │SLIP AND SKID│ ∼S6
          │            │            │ DETECTION   │
          │            │            │  PROCESS    │
          │            │            └─────────────┘
          │            │                   │
          │            │            ┌─────────────┐
          │            │            │  TANDEM     │ ∼S7
          │            │            │CONTROL PROCESS│
          │            │            └─────────────┘
          │            │                   │
          │            │            ┌─────────────┐
          │            │            │ DIAGNOSTIC  │ ∼S8
          │            │            │  PROCESS    │
          │            │            └─────────────┘
          │            │                   │
          │            │            ┌─────────────┐
          │            │            │ MONITRING   │ ∼S9
          │            │            │  PROCESS    │
          │            │            └─────────────┘
          │            │                   │
          │            └───────────────────┤
          │                                │
    ┌─────────────┐
    │ RETURN TO THE│ ∼S10
    │  ORIGINAL   │
    │  PROGRAM    │
    └─────────────┘
```

FIG. 4

FIG. 5

```
        ENTRY OF
       INTERRUPT  ⟩~S0
        PROGRAM
           │
           ▼           S14
       INTERRUPT
        BY  SY3 ⟩─────────────┐
         NO      YES          │
           │                  ▼
           │            CURRENT         ~S3
           │         CONTROL PROCESS
           │                  │
           │                  ▼
           │            GSO  CONTROL    ~S4
           │            PROCESS
           │                  │
           │                  ▼
           │            SPEED           ~S5
           │            CALCULATION
           │            PROCESS
           │                  │
           │                  ▼
           │            SLIP  AND  SKID  ~S6
           │            DETECTION
           │            PROCESS
           │                  │
           │                  ▼
           │            TANDEM          ~S7
           │            CONTROL
           │            PROCESS
           │                  │
           │                  ▼
           │            DIAGNOSTIC      ~S8
           │            PROCESS
           │                  │
           │                  ▼
           │            MONITORING      ~S9
           │            PROCESS
           │                  │
           │◄─────────────────┘
           ▼
       RETURN TO THE
        ORIGINAL     ⟩~S10
        PROGRAM
```

5

# F I G. 6

# F I G. 7